# EUROPÄISCHE PATENTANMELDUNG

(11) **EP 2 552 009 A1**
(43) Veröffentlichungstag der Anmeldung: **30.01.2013**
(21) Anmeldenummer: 11175770.4
(22) Anmeldetag: 28.07.2011
(51) Int. Cl.: H02P 5/74, B60L 15/20

(54) **Elektrisch antreibbares Fahrzeug und Verfahren zum Betreiben desselben**

(71) Anmelder: Siemens Aktiengesellschaft, 80333 München (DE)
(72) Erfinder: Schierling, Hubert, 91052 Erlangen (DE)

(57) **Zusammenfassung**

Bei einem elektrisch antreibbaren Fahrzeug ist man bestrebt, die beispielsweise in einer Traktionsbatterie gespeicherte elektrische Energie, mit welcher ein elektrischer Antrieb des Fahrzeugs betrieben wird, möglichst effizient zu nutzen. Es ist daher Aufgabe der vorliegenden Erfindung, einen effizienten Betrieb eines elektrisch antreibbaren Fahrzeugs zu ermöglichen. Das erfindungsgemäße Fahrzeug weist einen umrichtergespeisten Synchronmotor (12) als eine erste elektrische Antriebseinrichtung und einen umrichtergespeisten Asynchronmotor (14) als eine zweite elektrische Antriebseinrichtung auf. Das erfindungsgemäße Verfahren sieht vor, in einem Teillastbetrieb, in welchem eine zum Antreiben des Fahrzeugs aufzubringende Fahrleistung kleiner als ein vorbestimmter Grenzwert ist, das Fahrzeug nur mit dem Synchronmotor (12) anzutreiben. In einem Volllastbetrieb dagegen, in welchem die aufzubringende Fahrleistung größer als der Grenzwert ist, wird das Fahrzeug sowohl mit dem Synchronmotor (12) als auch mit dem Asynchronmotor (14) angetrieben.

## Beschreibung

Die Erfindung betrifft ein elektrisch antreibbares Fahrzeug. Bei diesem handelt es sich bevorzugt um einen Kraftwagen. Es kann sich aber auch beispielsweise um ein Flurförderzeug handeln. Zu der Erfindung gehört auch ein Verfahren zum Betreiben des Fahrzeugs.

Bei einem elektrisch antreibbaren Fahrzeug ist man bestrebt, die beispielsweise in einer Traktionsbatterie gespeicherte elektrische Energie, mit welcher ein elektrischer Antrieb des Fahrzeugs betrieben wird, effizient zu nutzen. Aus diesem Grund sollte der elektrische Antrieb einen möglichst großen Wirkungsgrad aufweisen.

Als Antriebseinheit eines elektrischen Antriebs kann eine umrichtergespeiste Drehfeldmaschine verwendet werden. Mittels des Umrichters lassen sich dabei aus einer Gleichspannung eines Zwischenkreises die Wechselspannungen erzeugen, mit denen ein Drehstrom in Statorwicklungen der Drehfeldmaschine eingeprägt werden kann. Die Frequenz und die Amplitude der Wechselspannungen ist mittels des Umrichters einstellbar, so dass sich ein gewünschter Betriebspunkt der Drehfeldmaschine einstellen lässt, bei dem ein benötigtes Drehmoment erzeugt und eine Welle der Drehfeldmaschine mit einer benötigten Drehzahl rotiert.

Es ist Aufgabe der vorliegenden Erfindung, einen effizienten Betrieb eines elektrisch antreibbaren Fahrzeugs zu ermöglichen.

Die Aufgabe wird durch ein elektrisch antreibbares Fahrzeug gemäß Patentanspruch 1 sowie durch ein Verfahren gemäß Patentanspruch 12 gelöst. Vorteilhafte Weiterbildungen des erfindungsgemäßen Fahrzeugs und des erfindungsgemäßen Verfahrens sind durch die Unteransprüche gegeben.

Das erfindungsgemäße Fahrzeug weist einen umrichtergespeisten Synchronmotor als eine erste elektrische Antriebseinrichtung und einen umrichtergespeisten Asynchronmotor als eine zweite elektrische Antriebseinrichtung auf. Diese Kombination eines Synchron- und eines Asynchronmotors weist den Vorteil auf, dass für nahezu einen gesamten Bereich möglicher Betriebspunkte, d.h. für nahezu sämtliche bei einem Fahrzeug vorkommenden Kombinationen aus einem benötigten Drehmoment und einer benötigte Drehzahl, jeder der Motoren mit einem günstigen Wirkungsgrad betrieben werden kann. Die beiden elektrischen Antriebseinheiten lassen sich dabei auch zugleich betreiben, um beispielsweise gemeinsam ein bestimmtes Gesamtantriebsmoment zu erzeugen. Jeder der Motoren kann dabei in einem für ihn günstigen Betriebspunkt betrieben werden. Bevorzugt ist der Synchronmotor für einen bestimmten Betriebsbereich des Fahrzeugs in einer optimalen Weise ausgelegt. Durch eine entsprechende Regelung kann der Synchronmotor dabei immer dann mittels des Asynchronmotors unterstützt werden, wenn sich durch einen Betrieb des Synchronmotors allein ein schlechterer Wirkungsgrad oder ein zu geringes Antriebsmoment ergeben sollte, weil der Synchronmotor sich außerhalb desjenigen Betriebsbereichs befindet, für den er optimiert wurde.

Entsprechend sieht das erfindungsgemäße Verfahren vor, bei einem elektrisch antreibbaren Fahrzeug einen Synchronmotor und einen Asynchronmotor bereitzustellen. In einem Teillastbetrieb, in welchem eine zum Antreiben des Fahrzeugs aufzubringende Fahrleistung kleiner als ein vorbestimmter Grenzwert ist, wird das Fahrzeug nur mit dem Synchronmotor angetrieben. Bei dem Grenzwert handelt es sich dabei um einen Wert, der kleiner als die maximale Antriebsleistung ist, welche die beiden Motoren zusammen höchstens bereitstellen können. Beispielsweise kann der Grenzwert die halbe maximale Antriebsleistung betragen. Der Grenzwert kann auch von einer Drehzahl wenigstens eines der Motoren abhängen.

In einem Volllastbetrieb dagegen, in welchem die aufzubringende Fahrleistung größer als der Grenzwert ist, wird das Fahrzeug sowohl mit dem Synchronmotor als auch mit dem Asynchronmotor angetrieben. Durch das erfindungsgemäße Verfahren erhält man einen Antrieb, der gerade im Teillastbereich mit sehr hohem Wirkungsgrad betrieben werden kann.

Bevorzugt handelt es sich bei der Synchronmaschine um eine permanentmagneterregte Synchronmaschine. Mit dieser lässt sich ein besonders hoher Wirkungsgrad erzielen, da für ihre Erregung kein zusätzlicher Erregerstrom bereitgestellt werden muss.

Eine umrichtergespeiste Drehfeldmaschine lässt sich konstruktionsbedingt bis zu einer vorbestimmbaren Eckfrequenz in einem Ankerstellbereich und darüber hinaus in einem Feldschwächbereich betreiben. Die Eckfrequenz ist dabei durch die Kombination aus einer bestimmten Drehfeldmaschine, dem diese speisenden Umrichter und dem Zwischenkreis bestimmt, welcher den Umrichter versorgt. Eine andere Bezeichnung für die Eckfrequenz ist auch Typpunkt. Eine besonders günstige Kombination der beiden Motoren ergibt sich bei dem erfindungsgemäßen Fahrzeug, wenn eine Eckfrequenz des umrichtergespeisten Asynchronmotors kleiner als eine Eckfrequenz des umrichtergespeisten Synchronmotors ist.

Die Eckfrequenz ist normalerweise auf eine sogenannte elektrische Drehzahl eines Läufers der jeweiligen Drehfeldmaschine bezogen. Ein Verhältnis der elektrischen zur mechanischen Drehzahl ist dann durch die Polpaarzahl der jeweiligen Drehfeldmaschine gegeben. Im Zusammenhang mit der Erfindung sollen hier die beiden Eckfrequenzen auf eine gemeinsame Antriebswelle des Fahrzeugs bezogen sein. Mit anderen Worten beginnt der Feldschwächbereich der Asynchronmaschine bereits bei einer niedrigeren Drehzahl dieser Antriebswelle als bei der Synchronmaschine. Mittels der Polpaarzahlen der beiden Motoren und mittels der Übersetzungsverhältnisse eventuell zwischengeschalteter Differentiale kann auf die entsprechende elektrische Drehzahl der Motoren rückgeschlossen werden. Derjenige Drehzahlbereich der Antriebswelle, bei welchem die Synchronmaschine im Ankerstellbereich betrieben wird, wird im Folgenden als Grunddrehzahlbereich der Synchronmaschine bezeichnet. Genauso ergibt sich ein entsprechender Grunddrehzahlbereich der Asynchronmaschine.

Eine Synchronmaschine, insbesondere eine permanentmagneterregte Synchronmaschine, weist in ihrem Grunddrehzahlbereich einen besonders hohen Wirkungsgrad auf. Im Gegensatz dazu ist der Wirkungsgrad einer Asynchronmaschine im Feldschwächbereich, insbesondere während eines Teillastbetriebs, besser als in ihrem Grunddrehzahlbereich. Durch die beschriebene Weiterbildung des erfindungsgemäßen Fahrzeugs (Eckfrequenz der Asynchronmaschine kleiner als diejenige der Synchronmaschine) ergibt sich also eine vorteilhafte Überschneidung der Bereiche mit hohem Wirkungsgrad der beiden Maschinen.

In Bezug auf den Synchronmotor ergibt sich eine vorteilhafte Weiterbildung des erfindungsgemäßen Fahrzeugs, wenn dieser eine verkettete Polradspannung erzeugt, die für alle Drehzahlen einer Welle des Synchronmotors, wie sie in einem bestimmungsgemäßen Betrieb des Fahrzeugs vorkommen können, kleiner als oder gleich der maximal zulässigen Spannung des Zwischenkreises ist, über welchen der Umrichter mit elektrischer Energie zum Betreiben der Synchronmaschine versorgt wird. Durch diese Weiterbildung ergibt sich der Vorteil, dass keine besondere Schutzbeschaltung für den Umrichter oder den Zwischenkreis nötig ist.

Eine besonders einfache Möglichkeit, eine ausreichend niedrige Polradspannung sicherzustellen, ist gemäß einer vorteilhaften Weiterbildung des erfindungsgemäßen Fahrzeugs dadurch gegeben, dass der Synchronmotor eine Eckfrequenz aufweist, die einem Wert für eine Drehzahl der Welle des Synchronmotors von wenigstens dem 0,7-fachen, bevorzugt wenigstens dem 0,9-fachen, der Höchstdrehzahl der Welle entspricht. Hierbei ist wieder ein Umrechnungsfaktor zu berücksichtigen, wie er sich durch die Polpaarzahl des Synchronmotors ergibt.

In Bezug auf den umrichtergespeisten Asynchronmotor ergibt sich eine vorteilhafte Weiterbildung des erfindungsgemäßen Fahrzeugs, wenn dieser eine Eckfrequenz aufweist, die einem Wert für eine Drehzahl der Welle des Asynchronmotors von höchstens dem 0,6-fachen, insbesondere höchstens dem 0,4-fachen, bevorzugt einem Drittel, der Höchstdrehzahl der Welle des Asynchronmotors entspricht. Auch hier ist mit "entspricht" gemeint, dass die Polpaarzahl des Asynchronmotors als Umrechnungsfaktor zu berücksichtigen ist. Durch einen Asynchronmotor mit einer Eckfrequenz, die in den genannten Bereichen liegt, ergibt sich der Vorteil, dass der Asynchronmotor über einen weiten Drehzahlbereich im Konstant-Leistungsbereich, das heißt im Feldschwächbereich, betrieben werden kann.

In Bezug auf die Polpaarzahlen der beiden Motoren weist der Synchronmotor bevorzugt eine größere Polpaarzahl auf als der Asynchronmotor. Diese Weiterbildung ist insbesondere bei einer Verwendung eines permanentmagneterregten Synchronmotors bevorzugt. Durch die genannte Wahl der Polpaarzahlen lässt sich für den Synchronmotor der pro Pol vorhandene magnetische Fluss minimieren, während zugleich bei der Asynchronmaschine ein Abgleich zwischen einem möglichst kleinen magnetischen Fluss einerseits und Verlusten aufgrund eines benötigten Magnetisierungsstroms ermöglicht ist. Die Polpaarzahl des Asynchronmotors ist dabei insbesondere kleiner als 4, bevorzugt gleich 2.

Ein weiterer Vorteil, der sich aus der Kombination eines Synchronmotors und eines Asynchronmotors ergibt, lässt sich durch eine Drehzahlbestimmungseinrichtung erzielen, welche dazu ausgelegt ist, eine Drehfrequenz des Synchronmotors zu ermitteln und in Abhängigkeit von der ermittelten Drehfrequenz eine Drehzahl des Asynchronmotors zu bestimmen. Bei der Synchronmaschine sind Drehzahl und Frequenz direkt proportional zueinander, da ihr Läufer keinen Schlupf bezüglich des Ständerdrehfelds aufweist. Bei kleinen Drehzahlen kann die Frequenz des Synchronmotors daher als Drehzahlinformation für einen drehzahlgeberlosen Betrieb der Asynchronmaschine genutzt werden. Dies ermöglicht einen feldorientierten Betrieb bis zum Stillstand der Asynchronmaschine. Zu dieser Weiterbildung des erfindungsgemäßen Fahrzeugs ergibt sich eine entsprechende Weiterbildung des erfindungsgemäßen Verfahrens, bei welcher eben eine Frequenz einer von dem Synchronmotor erzeugten Spannung erfasst wird und hieraus eine Drehzahlinformation für einen feldorientierten Betrieb der Asynchronmaschine ermittelt wird.

Besonders kompakt lässt sich eine Kombination aus einem Synchron- und einem Asynchronmotor ausgestalten, wenn diese ein gemeinsames Gehäuse aufweisen.

In Bezug auf die bauliche Ausgestaltung der elektrischen Antriebseinrichtungen ergibt sich eine weitere vorteilhafte Weiterbildung, wenn ein Läufer des Synchronmotors und ein Läufer des Asynchronmotors auf einer gemeinsamen Welle angeordnet sind. Dann können die beiden Antriebseinrichtungen als ein einzelnes Antriebsaggregat bereitgestellt werden.

Es ist aber auch denkbar, durch den Synchronmotor und den Asynchronmotor unterschiedliche Achsen des Fahrzeugs anzutreiben. Beispielsweise kann vorgesehen sein, die Vorderräder des Fahrzeugs mit einem der Motoren und die Hinterräder mit dem anderen anzutreiben. In diesem Zusammenhang sei erwähnt, dass das erfindungsgemäße Fahrzeug natürlich auch mehr als nur einen Synchronmotor und/oder auch mehr als nur einen Asynchronmotor aufweisen kann. Dann ist es beispielsweise möglich, jedes Rad des Fahrzeugs einzeln mit einem der Motoren oder einer Kombination aus einem der Synchron- und einem der Asynchronmotoren anzutreiben.

Die Erfindung umfasst auch Weiterbildungen des erfindungsgemäßen Verfahrens, die Weiterbildungen des erfindungsgemäßen Fahrzeugs entsprechen und die daher hier nicht gesondert beschrieben sind.

Die Erfindung wird im Folgenden anhand von Ausführungsbeispielen näher erläutert. Dazu zeigt:
- FIG 1: eine schematische Darstellung eines Zwei-MotorenAntriebs eines Personenkraftwagens, der eine Ausführungsform des erfindungsgemäßen Fahrzeugs darstellt,
- FIG 2: ein Diagramm, welches einen prinzipiellen Verlauf einer Leistungs-/Drehzahl-Kurve zeigt, wie sie sich für den Zwei-Motoren-Antrieb von FIG 1 ergibt, und
- FIG 3: ein Diagramm, welches einen prinzipiellen Verlauf einer Drehmoment-/Drehzahl-Kurve zeigt, wie sie sich für den Zwei-Motoren-Antrieb von FIG 1 ergibt.

Die Ausführungsbeispiele stellen bevorzugte Ausführungsformen der Erfindung dar.

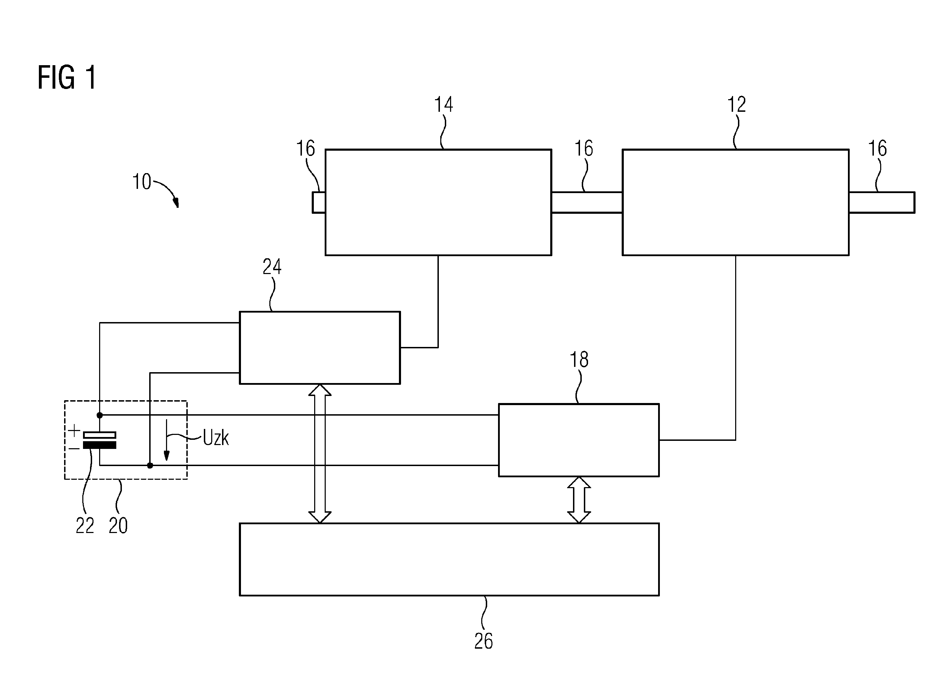

In FIG 1 ist ein Zwei-Motoren-Antrieb 10 eines (nicht näher dargestellten) Personenkraftwagens gezeigt. Mittels des Zwei-Motoren-Antriebs 10 können Räder des Personenkraftwagens angetrieben werden. Dazu kann ein Antriebsdrehmoment sowohl mit einer permanentmagneterregten Synchronmaschine 12 als auch mit einem Asynchronmotor 14 erzeugt werden. Die beiden Motoren 12, 14 treiben dabei eine gemeinsame Antriebswelle 16 an. Dazu sind ein (nicht näher dargestellter) Läufer des Synchronmotors 12 und ein (nicht näher dargestellter) Läufer des Asynchronmotors 14 auf der Antriebswelle 16 befestigt.

Zum Betreiben des Synchronmotors 12 wird von einem Umrichter 18 in Statorwicklungen des Synchronmotors 12 ein Drehstrom eingeprägt. Eine dafür nötige elektrische Energie erhält der Umrichter 18 aus einem Zwischenkreis 20, von dem in FIG 1 der Übersichtlichkeit halber nur ein Zwischenkreiskondensator 22 zum Bereitstellen einer geglätteten Zwischenkreis-Gleichspannung Uzk dargestellt ist. Zum Betreiben des Asynchronmotors 14 ist dieser mit einem weiteren Umrichter 24 gekoppelt, welcher die für den Betrieb des Asynchronmotors 14 benötigte elektrische Energie ebenfalls aus dem Zwischenkreis 20 erhält.

Die Umrichter 18 und 24 sind dazu ausgelegt, jeweils eine antriebsnahe Regelung, also beispielsweise eine Drehmomentregelung, für den Synchronmotor 12 bzw. den Asynchronmotor 14 durchzuführen. Eine Steuer-und-Regeleinheit 26 erzeugt Steuersignale für den Umrichter 18 und den Umrichter 24, durch welche eine Betriebsweise der beiden Umrichter 18, 24 koordiniert wird.

Eine von dem Synchronmotor 12 und dem Asynchronmotor 24 zusammen maximal erzeugbare Gesamtantriebsleistung wird bei einer Fahrt des Personenkraftwagens nur selten benötigt. Für eine überwiegende Zeitdauer während einer typischen Fahrt wird der Zwei-Motoren-Antrieb 10 nur in einem Teillastbetrieb betrieben, in welchem eine Antriebsleistung bereitzustellen ist, die beispielsweise weniger als halb so groß wie die Gesamtantriebsleistung sein kann. Der Zwei-Motoren-Antrieb 10 weist insbesondere für diesen Teillastbetrieb einen verhältnismäßig hohen Wirkungsgrad auf. Zugleich kann er für einen verhältnismäßig großen Drehzahlbereich der Antriebswelle 16 eine konstante Leistung aufbringen.

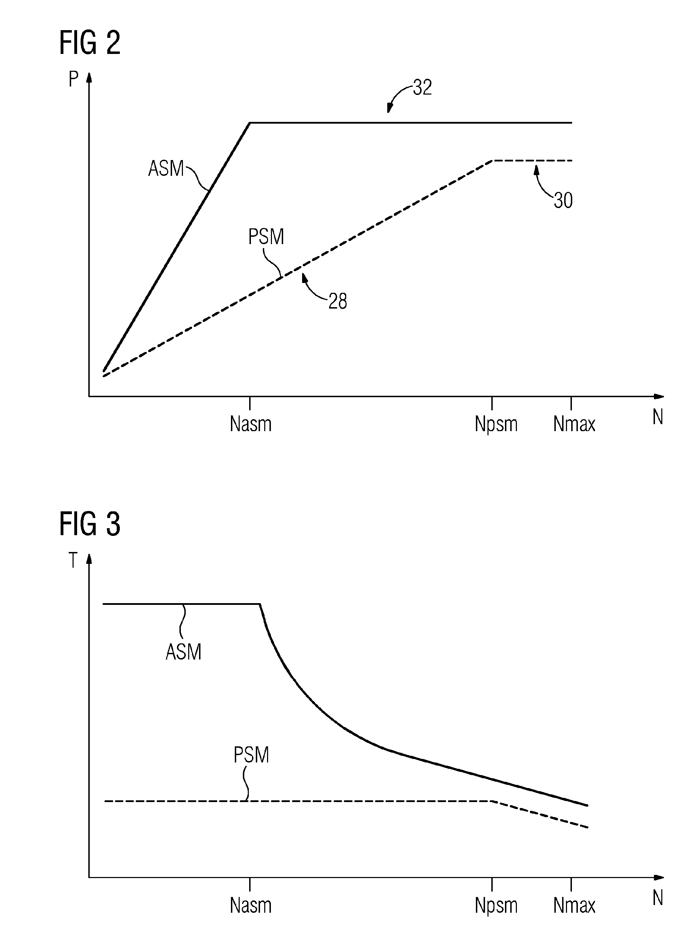

Die Funktionsweise des Zwei-Motoren-Antriebs 10 ist im Folgenden anhand von FIG 2 und FIG 3 näher erläutert. FIG 2 zeigt zwei Kurven betreffend eine Dauerantriebsleistung P, die dauerhaft von dem permanentmagneterregten Synchronmotor 12 (Kurve PSM) und dem Asynchronmotor 14 (Kurve ASM) in Abhängigkeit von einer Drehzahl N der Antriebswelle 16 abgegeben werden kann. FIG 3 zeigt dazu Kurven betreffend ein entsprechendes dauerhaft abgebbares Drehmoment oder Dauerdrehmoment T in Abhängigkeit von der Drehzahl N. Bei den Diagrammen handelt es sich um prinzipielle Verläufe. Insbesondere sinkt bei den Motoren 12, 14 tatsächlich deren Antriebsleistung für große Drehzahlen N.

Die Motoren 12, 14 haben unterschiedliche Eckfrequenzen. Eine Eckfrequenz Npsm des Synchronmotors 12 ist nahezu so groß wie eine Höchstdrehzahl Nmax, mit welcher die Antriebswelle 16 in einem bestimmungsgemäßen Betrieb des Personenkraftwagens höchstens rotiert. Die in FIG 2 auf der Abszisse abgetragene Eckfrequenz Npsm ist derjenige Wert, wie er sich für die Eckfrequenz des Synchronmotors 12 bezogen auf die Antriebsachse 16 ergibt. Ein Wert für die Eckfrequenz bezogen auf die elektrische Drehzahl des Synchronmotors 12 ergibt sich durch Multiplizieren der Eckfrequenz Npsm mit einer Polpaarzahl des Synchronmotors 12. Durch die Eckfrequenz Npsm ist eine Grenze zwischen einem Ankerstellbereich 28, in welchem der Synchronmotor 12 durch den Umrichter 18 mit näherungsweise konstantem Verhältnis U/f betrieben wird, und einem Feldschwächbereich 30 beschrieben.

Durch die verhältnismäßig große Eckfrequenz Npsm ergibt sich auch für den Fall, dass die Antriebswelle 16 mit der Höchstdrehzahl Nmax rotiert, ein Scheitelwert einer verketteten Polradspannung des Synchronmotors 12, welcher kleiner als ein maximal zulässiger Wert für die Zwischenkreis-Gleichspannung Uzk ist. Bei dieser Auslegung kann deshalb auf einen Überspannungsschutz verzichtet worden.

Des Weiteren umfasst der Betriebsbereich des Synchronmotors 12 auch einen Feldschwächbereich 30 in einem Drehzahlbereich Npsm bis Nmax, der aufgrund der großen Eckfrequenz Npsm verhältnismäßig schmal ist. Der Synchronmotor 12 wird deshalb für alle Drehzahlen der Antriebswelle 16, die im bestimmungsgemäßen Betrieb des Personenkraftwagens vorkommen können (0 bis Nmax) unterhalb seines Kippmoments betrieben. Damit ist der Zwei-Motoren-Antrieb 10 auch bei einer hohen Drehzahl der Antriebswelle 16 auch über sein Nenn-Drehmoment hinaus belastbar, da stets eine genügend große Drehmomentreserve durch den Synchronmotor 12 zur Verfügung steht.

Eine Eckfrequenz Nasm des Asynchronmotors 14 ist etwa um einen Faktor Drei kleiner als die Höchstdrehzahl Nmax der Antriebswelle 16. Entsprechend umfasst ein Feldschwächbereich 32 einen weiten Bereich (Nasm bis Nmax) der möglichen Drehzahlen der Antriebswelle 16.

In FIG 3 ist gezeigt, wie im jeweiligen Feldschwächbereich 30, 32, in welchem die Motoren 12, 14 jeweils eine konstantes, von der Drehzahl N der Antriebswelle 16 weitestgehend unabhängige Antriebsleistung abgeben, mit steigender Drehzahl N ein dauerhaft von dem jeweiligen Motor 12, 14 erzeugbares Dauerdrehmoment T sinkt.

Bei der in FIG 2 und FIG 3 gezeigten Auslegung haben die beiden Motoren 12, 14 eine ähnliche Nennleistung. Die Aufteilung kann aber abhängig von den Anforderungen, die an den Zwei-Motoren-Antrieb 10 gestellt werden, auch unterschiedlich gewählt werden.

Durch die Steuer-und-Regeleinheit 26 und die Umrichter 18, 24 werden die beiden Motoren 12, 14 so betrieben, dass sich im Dauerbetrieb ein guter Wirkungsgrad einstellt: Bei einer Fahrt mit konstanter Geschwindigkeit wird nur ein vergleichsweise kleines Drehmoment benötigt. Der Asynchronmotor 14 wird dann ganz abgeschaltet, das heißt sein Läufer rotiert mit der Antriebswelle 16 mit, ohne ein Antriebsmoment auf diese auszuüben. Der Synchronmotor 12 bringt dann das benötigte Antriebsdrehmoment alleine auf. Da der Personkraftwagen die meiste Zeit mit kleinem Drehmoment betrieben wird, ergibt sich durch diese Betriebsweise über den gesamten Fahrzyklus eine hohe Energieeffizienz.

Der beschriebene Personenkraftwagen und ähnlich ausgestaltete elektrisch antreibbare Fahrzeuge, wie sie im Folgenden beschrieben werden, weisen neben dem hohen Wirkungsgrad ihres elektrischen Antriebs noch weitere günstige Eigenschaften auf:
Durch die Kombination der Synchronmaschine 12 mit der Asynchronmaschine 14 sind die Dauerantriebsleistung P und das Dauerdrehmoment T bei hoher Drehzahl größer als bei einem Einzelantrieb mit gleichem Stillstandsmoment. Außerdem sinkt die Dauerantriebsleistung P des Gesamtsystems, d.h. des Zwei-Motor-Antriebs 10, im Feldschwächbereich nicht.

Da zwei unabhängige Antriebsumrichter 18,24 vorhanden sind, kann bei einem Ausfall eines der beiden mit reduzierter Leistung weitergefahren werden. Mit anderen Worten ergibt sich bei dem Zwei-Motor-Antrieb 10 konstruktionsbedingt eine Redundanz. Zudem lassen sich zwei getrennte Umrichter und Motoren leichter in einem Fahrzeug unterbringen als ein großer Umrichter und ein großer Motor. Besonders kompakt lässt sich der Zwei-Motor-Antrieb 10 bauen, denn die beiden Motoren ein gemeinsames Gehäuse aufweisen.

Der Asynchronmotor 14 lässt sich auch aus dem Stillstand der Antriebswelle 16 heraus im feldorientierten Betrieb anfahren. Hierzu wird bei kleinen Drehzahlen die Frequenz beispielsweise einer Polradspannung des Synchronmotors 12 gemessen und daraus eine Drehzahlinformation betreffend den Asynchronmotor 14 ermittelt. Der Asynchronmotor 14 muss deshalb selbst nicht mit einem aufwändigen und teuren Drehzahlgeber ausgestattet sein, wie es sonst für einen feldorientierten Betrieb bis zum Stillstand nötig wäre.

Im Unterschied zu dem in FIG 1 gezeigten Beispiel können die beiden Motoren auch auf verschiedene Achsen des Antriebs wirken. Zum Beispiel könnte die Synchronmaschine die Vorderachse antreiben und die Asynchronmaschine die Hinterachse. Dies ermöglicht einen Vierradantrieb ohne Antriebswelle zwischen Vorder- und Hinterachse. Auch bei einer solchen Ausgestaltung eines elektrischen Fahrzeugs kann der Synchronmotor als Drehzahlgeber für den Asynchronmotor genutzt werden.

Die Motoren 12, 14 können mit unterschiedlichen Polpaarzahlen ausgelegt sein. Zum Beispiel kann die Synchronmaschine 12 eine hohe Polpaarzahl (zum Beispiel größer als vier) haben und mit entsprechend hoher Ständerfrequenz betrieben werden. Unabhängig davon kann die Asynchronmaschine 14 mit kleiner Polpaarzahl (z.B. zwei) und niedriger Frequenz betrieben werden.

Die Masse des Synchronmotors 12 ist kleiner als diejenige eines großen Motors, der dieselbe Gesamtantriebsleistung erzeugen kann wie der Zwei-Motoren-Antrieb 10. Aus diesem Grund erreicht der Synchronmotor 12 zu Beginn einer Fahrt schneller seine Betriebstemperatur. Dies kann genutzt werden, um im Winter den Fahrzeuginnenraum nach dem Losfahren schnell zu heizen.

Insgesamt ist durch die Beispiele gezeigt, dass bei einem Zwei-Motoren-Antrieb die beiden Motoren so betrieben werden können, dass sich in den relevanten Betriebsbereichen, also sowohl im Teillastbetrieb als auch im Volllastbetrieb und bei unterschiedlichen Drehzahlen, die Vorteile, die ein Synchronmotor beim Antreiben eines Personenkraftwagens bietet, und diejenigen eines Asynchronmotors beim Antrieb des Personenkraftwagens ergänzen. Zugleich werden Nachteile vermieden, die sich bei ausschließlicher Verwendung eines der beiden Motoren ergeben können. Für einen Betrieb mit hohem Wirkungsgrad in ihrem Grunddrehzahlbereich des Synchronmotors (als in dem obigen Beispiel N <= Npsm) eignet sich eine permanent magneterregte Synchronmaschine am besten. Dies gilt insbesondere für Teillast. Im Konstant-Leistungsbereich der Synchronmaschine (siehe den Feldschwächbereich 30) benötigt diese jedoch auch bei Teillast hohe Ströme, um die Klemmenspannung klein zu halten. Eine Asynchronmaschine ist in der Feldschwächung (siehe den Feldschwächbereich 32) bei Teillast überlegen, hat aber in ihrem Grunddrehzahlbereich (im obigen Beispiel N <= Nasm) einen schlechteren Wirkungsgrad.

## Patentansprüche

1. Elektrisch antreibbares Fahrzeug mit einem umrichtergespeisten Synchronmotor (12) als einer ersten elektrischen Antriebseinrichtung und einem umrichtergespeisten Asynchronmotor (14) als einer zweiten elektrischen Antriebseinrichtung.

2. Fahrzeug nach Anspruch 1, **dadurch gekennzeichnet, dass** der Synchronmotor (12) als permanentmagneterregte Synchronmaschine ausgebildet ist.

3. Fahrzeug nach einem der Ansprüche 1 oder 2, **dadurch gekennzeichnet, dass** eine auf eine Antriebswelle (16) des Fahrzeugs bezogene Eckfrequenz (Nasm) des umrichtergespeisten Asynchronmotors (14) kleiner als eine auf dieselbe Antriebswelle (16) bezogene Eckfrequenz (Npsm) des umrichtergespeisten Synchronmotors (12) ist.

4. Fahrzeug nach einem der vorhergehenden Ansprüche, welches bestimmungsgemäß für einen Betrieb bis zu einer vorbestimmten Höchstdrehzahl (Nmax) einer Welle (16) des Synchronmotors (12) ausgelegt ist und bei welchem ein Zwischenkreis (20) einer Umrichterspeisung (18) des Synchronmotors (12) für einen Betrieb bis zu einer vorbestimmten maximalen Zwischenkreisspannung (Uzk) ausgelegt ist, **dadurch gekennzeichnet, dass** der umrichtergespeiste Synchronmotor (12) dazu ausgelegt ist, für den Fall, dass die Welle (16) mit der Höchstdrehzahl (Nmax) rotiert, eine verkettete Polradspannung zu erzeugen, die kleiner als oder gleich der maximalen Zwischenkreisspannung (Uzk) ist.

5. Fahrzeug nach einem der vorhergehenden Ansprüche, welches bestimmungsgemäß für einen Betrieb bis zu einer vorbestimmten Höchstdrehzahl (Nmax) einer Welle (16) des Synchronmotors (12) ausgelegt ist, **dadurch gekennzeichnet, dass** der umrichtergespeiste Synchronmotor (12) eine Eckfrequenz (Npsm) aufweist, die einem Wert für eine Drehzahl der Welle (16) des Synchronmotors (12) von wenigstens dem 0,7-fachen, bevorzugt wenigstens dem 0,9-fachen, der Höchstdrehzahl (Nmax) entspricht.

6. Fahrzeug nach einem der vorhergehenden Ansprüche, welches bestimmungsgemäß für einen Betrieb bis zu einer vorbestimmten Höchstdrehzahl (Nmax) einer Welle (16) des Asynchronmotors (14) ausgelegt ist, **dadurch gekennzeichnet, dass** der umrichtergespeiste Asynchronmotor (14) eine Eckfrequenz (Nasm) aufweist, die einem Wert für eine Drehzahl der Welle (16) des Aynchronmotors (14) von höchstens dem 0,6-fachen, insbesondere höchstens dem 0,4-fachen, bevorzugt einem Drittel, der Höchstdrehzahl (Nmax) der Welle (16) des Asynchronmotors (14) entspricht.

7. Fahrzeug nach einem der vorhergehenden Ansprüche, **dadurch gekennzeichnet, dass** der Synchronmotor (12) eine größere Polpaarzahl aufweist als der Asynchronmotor (14), wobei die Polpaarzahl des Asynchronmotors (14) insbesondere kleiner als vier, bevorzugt gleich zwei, ist.

8. Fahrzeug nach einem der vorhergehenden Ansprüche, **gekennzeichnet durch** eine Drehzahlbestimmungseinrichtung, welche dazu ausgelegt ist, eine Drehfrequenz des Synchronmotors (12) zu ermitteln und in Abhängigkeit von der ermittelten Drehfrequenz eine Drehzahl des Ansynchronmotors (14) zu bestimmen.

9. Fahrzeug nach einem der vorhergehenden Ansprüche, **dadurch gekennzeichnet, dass** ein Läufer des Synchronmotors (12) und ein Läufer des Asynchronmotors (14) auf einer gemeinsamen Welle (16) angeordnet sind.

10. Fahrzeug nach einem der Ansprüche 1 bis 8, **dadurch gekennzeichnet, dass** bei dem Fahrzeug durch den Synchronmotor und den Asynchronmotor unterschiedliche Achsen des Fahrzeugs antreibbar sind.

11. Fahrzeug nach einem der vorhergehenden Ansprüche, **dadurch gekennzeichnet, dass** der Synchronmotor (12) und der Asynchronmotor (14) ein gemeinsames Motorgehäuse aufweisen.

12. Verfahren zum Betreiben eines elektrisch antreibbaren Fahrzeugs mit einem Synchronmotor (12) und einem Asynchronmotor (14), durch welche zusammen eine maximale Antriebsleistung bereitstellbar ist, wobei bei dem Verfahren in einem Teillastbetrieb, in welchem eine zum Antreiben des Fahrzeugs aufzubringende Fahrleistung kleiner als ein vorbestimmter Grenzwert ist, welcher kleiner als die maximale Antriebsleistung ist, das Fahrzeug nur mit dem Synchronmotor (12) angetrieben wird und in einem Volllastbetrieb, in welchem die aufzubringende Fahrleistung größer als der Grenzwert ist, das Fahrzeug mit dem Asynchronmotor (14) und dem Synchronmotor (12) angetrieben wird.

13. Verfahren nach Anspruch 12, **dadurch gekennzeichnet, dass** eine Frequenz einer von dem Synchronmotor (12) erzeugten Spannung erfasst wird und hieraus eine Drehzahlinformation für einen feldorientierten Betrieb der Asynchronmaschine (14) ermittelt wird.
